# EUROPEAN PATENT SPECIFICATION

(11) **EP 0 805 625 B1**
(45) Date of publication and mention of the grant of the patent: **17.05.2000**
(21) Application number: 96905214.1
(22) Date of filing: 24.01.1996
(51) Int. Cl.: A01N 25/04, A01N 25/06, A01N 53/00

(54) **INSECTICIDALLY-ACTIVE COMPOSITION**
ALS INSEKTIZID AKTIVE ZUSAMMENSETZUNG
COMPOSITION INSECTICIDE

(30) Priority: 27.01.1995 US 379247
(43) Date of publication of application: 12.11.1997
(73) Proprietor: S.C. JOHNSON & SON, INC., Racine, WI 53403-2236 (US)
(72) Inventor: NELSON, Kurt, D., Racine, WI 53406 (US)
(74) Representative: Jones, Alan John
(86) International application number: PCT/US96/00983
(87) International publication number: WO 96/22686

(56) References cited:
- EP-A- 0 059 027
- EP-A- 0 069 906
- EP-A- 0 272 374
- WO-A-93/00007
- US-A- 1 707 466
- US-A- 2 162 904
- US-A- 3 303 091
- US-A- 4 826 674
- DATABASE WPI Section Ch, Week 8939 Derwent Publications Ltd., London, GB; Class C03, AN 89-280837 XP002006378 & JP,A,01 203 302 (FUMAKILA KK) , 16 August 1989
- DATABASE WPI Section Ch, Week 7707 Derwent Publications Ltd., London, GB; Class C03, AN 77-12116Y XP002006379 & JP,A,52 001 031 (TOYO AELOSOL IND KK) , 6 January 1977
- DATABASE WPI Section Ch, Week 9506 Derwent Publications Ltd., London, GB; Class A97, AN 95-041122 XP002006380 & JP,A,06 321 703 (EARTH SEIYAKU KK) , 22 November 1994

## Description

The present invention relates to an insecticidally-active composition that forms an oil-out emulsion of limited stability. This composition when sprayed onto a target surface does not leave unsightly milky residues. Moreover, it is highly effective in killing insects.

### Description of the Background Art

Insecticidally-active compositions are generally sprayed from a container such as an aerosol container onto a target surface. For successful spraying that is uniform and evenly distributed, the composition must be homogeneous or nearly homogeneous. Traditionally, many insecticidally-active compositions have had a single homogeneous oil phase. However, such compositions usually have high flammability and contribute petroleum volatiles to the atmosphere.

To reduce the oil content, compositions were developed that form a stable homogeneous emulsion containing an aqueous phase and an oil phase, such as those disclosed in U.S. Patent Nos. 3,159,535 and 3,303,091. U.S. Patent No. 5,178,871 discloses a stable, double emulsion. However, when such compositions are sprayed onto a target surface, unsightly milky residues that characterize the appearance of an emulsion frequently are left on the surface, at least until the composition thoroughly dries.

Compositions have also been developed that form water-out (or oil-in-water) emulsions, in which the aqueous phase is the continuous phase and the oil phase is the embedded or discontinuous phase, such as those disclosed in U.S. Patent No. 4,822,613, 4,889,710, 4,923,897, and 5,094,853. However, such compositions typically form a stable foam when they are sprayed onto a target surface. Moreover, if the active ingredient is dissolved or dispersed in the aqueous phase, the active ingredient does not penetrate water repelling chitin insect surfaces effectively.

U.S. Patent No. 2,418,652 discloses a water-out emulsion to which a cationic emulsifier has been added, albeit in an amount less than an emulsifying amount. The cationic material is believed to adjust the surface charge of the suspended oil globules of the water-out emulsion to increase their ability to adhere to a generally negatively charged leaf surface.

U.S. Patent No. 1,707,466 discloses a concentrated, stable oil emulsion that can be diluted with water to form a stable dispersion of oil in water. Although the dispersion is disclosed as stable over time while in its container, it is said to substantially break down upon contacting the target surface to coat plants or insect eggs with oil, combatting insect scale and killing the coated insect eggs. No insecticide is used other than the oil itself.

U.S. Patent No. 4,904,464 discloses an insecticide composition containing cocodiethanolamide that separates into distinct water and oil phases, which, upon agitation, form an unstable dispersion, as opposed to an oil-out emulsion, that separates upon dispensing immediately subsequent to agitation.

US-A-2 162 904 discloses an insecticidal non-phytocidal petroleum spray oil containing a fatty acid soap or ester emulsifier both soluble and stable in the spray oil in combination with a stabilizer, containing another emulsifier, for a resultant emulsion with water, said fatty acid soap or ester emulsifier preferably approximating around 1.0% to 1.5% of the oil.

EP-A-0 069 906 (corresponding to CA-A-1 174 967) discloses an aerosol formulation based on water comprising 0.01 to 6% by weight of at least one insecticidal substance, 0.1 to 2% by weight of at least one emulsifier, 5 to 40% by weight of at least one organic solvent, 20 to 70% by weight of water, and 10 to 50% by weight of propellant.

### Summary of the Invention

We have discovered a novel insecticidally-active composition that does not leave unsightly milky stains when sprayed onto a target surface. The composition is also highly effective in killing a variety of insects, including roaches, ants, silverfish, crickets, and spiders.

The present invention provides an insecticidally-active water-in oil-out emulsion, comprising:
water;
a hydrocarbon solvent selected from the group consisting of aliphatic, aromatic, and naphthenic solvents, and mixtures thereof;
at least one insecticidally active ingredient selected from the group consisting of natural pyrethrins, synthetic pyrethroids, halogenated pyrethroids, and cyano-pyrethroids; and
an amount of surfactant effective to form a non-foaming water-in oil-out emulsion which upon visual inspection appears to completely separate into a composition with an oil phase and a water phase within fifteen seconds after mixing of the emulsion ceases, the surfactant being present in an amount of from 0.03% to less than 0.10% by weight, based on the total weight of the emulsion;
wherein the surfactant has an HLB of between about 3 and about 9 is selected from the group consisting of glycol, glycerol, and sorbitol esters of oleic, stearic, palmitic, and lauric acids, polyethoxylated fatty alcohols having 2 to 9 ethylene oxide units, sorbitan monooleate, sorbitan monostearate, and sorbitan monopalmitate and polyethoxylated nonyl phenols having 2 to 9 ethylene oxide units.

### Detailed Description of the Invention

The insecticidally-active composition of the present invention includes an aqueous phase and an oil phase. An insecticidally-active ingredient that is oil soluble and substantially water insoluble is dissolved in the oil phase.

The insecticidally-active composition of the invention forms an oil-out emulsion of limited stability. An emulsion made in accordance with the invention shall be considered to be of limited stability if it is visually apparent that it at least begins to separate within fifteen seconds of the cessation of brisk manual shaking in a bottle or other closed container.

An oil-out emulsion having oil and aqueous phases (or, as an equivalent term, a water-in-oil emulsion) is a type of emulsion in which the oil phase is the continuous phase and the aqueous phase is the embedded or discontinuous phase. Because the oil-out emulsion of this invention has limited stability, the aqueous phase and the oil phase of the composition usually separate during storage, at least partially.

When the two phases of the insecticidally-active composition of the invention are mixed together, for example, by shaking or agitating a container containing the composition, an oil-out emulsion is formed that is substantially foam-free but that also is homogeneous or nearly homogeneous. When this emulsion is sprayed from the container, the aqueous phase separates out from the oil phase at least partially and preferably completely, while the emulsion is still traveling through the air or promptly upon its hitting a target surface. Typically, the aqueous phase separates out within about 10 seconds after the emulsion is sprayed. Preferably, the aqueous phase separates out within about 5 seconds, and most preferably, the aqueous phase separates out immediately after the emulsion is sprayed. As a result, no unsightly milky residue that characterizes the appearance of an emulsion is left on the target surface.

Many insects have a exoskeleton made mainly of chitin, which has a water repellent surface. Water easily sheds from chitin surfaces without much penetration into the pores of the insect surfaces. In the present invention, the aqueous phase separates out from the oil phase and runs off, leaving the oil phase and its dissolved insecticidally-active ingredient on the insect surface. The oil phase wets the surface, with the result that the insecticidally-active ingredient carried in the oil phase more effectively penetrates the surface pores. Consequently, the composition of this invention is highly effective in killing insects.

Preferably a surfactant is present in the composition in an amount that is effective to provide an oil-out emulsion of limited stability. If the amount of the surfactant present is excessive, the emulsion may become too stable and take on an excessively milky appearance. That is, the aqueous phase and the oil phase will not separate sufficiently after spraying. If the amount of the surfactant present is insufficient, the composition may not form an emulsion, at all. Typically, the amount of surfactant present is from 0.03% to less than 0.10%, preferably from 0.05% to less than 0.10% by weight, based on the total weight of the composition.

Non-ionic, anionic, and cationic surfactants can all be used in the composition of this invention so long as the surfactant can cause the formation of an oil-out emulsion by manual shaking of the composition in a bottle or can. Preferably, the surfactant has a hydrophilic/lipophilic balance (hereafter referred to as an "HLB") of between about 3 and about 9. If the surfactant has an HLB greater than about 9, a water-out emulsion could form upon shaking, instead of an oil-out emulsion. If the surfactant has an HLB less than about 3, it becomes difficult to form an emulsion in-situ by shaking the container holding the composition.

Non-ionic surfactants are the preferred surfactants used in the composition of the present invention because they generally exhibit low toxicity to humans and non-target animals and are non-corrosive. Cationic surfactants tend to be corrosive to the commercially common metal containers typically used to contain insecticidal sprays. Anionic surfactants may cause nasal irritation if breathed and may also cause the formation of foam.

Examples of suitable non-ionic surfactants include long chain fatty acid esters of polyhydroxylic compounds such as glycol, glycerol, and sorbitol esters of oleic, stearic, palmitic, and lauric acids; polyethoxylated fatty alcohols having 2 to 9 ethylene oxide units; and polyethoxylated nonyl phenols having 2 to 9 ethylene oxide units.

The preferred non-ionic surfactants are sorbitan monooleate, sorbitan monostearate, and sorbitan monopalmitate, which are commercially available as Span® 80, Span® 60, and Span® 40, respectively, from ICI Specialty Chemicals. The most preferred non-ionic surfactant for the composition of this invention is sorbitan monooleate.

The oil phase of the composition of this invention contains a hydrocarbon solvent. The amount of the solvent present in the composition should be effective to dissolve the active ingredient and form an oil-out emulsion. Typically, the hydrocarbon solvent is present in the composition in an amount of from about 0.5% to about 40% and preferably from about 5% to about 30% by weight, based on the total weight of the composition.

Examples of suitable hydrocarbon solvents include aliphatic, aromatic, and naphthenic solvents, and mixtures thereof. Examples of suitable aliphatic hydrocarbons include isoparaffinic and normal paraffinic solvents such as those commercially available from Exxon Chemicals of Houston, Texas under the ISOPAR® and NORPAR® brand names. Examples of suitable aromatic solvents include benzene, toluene, and xylene. Examples of suitable naphthenic solvents include dearomatized aliphatics and isoparaffins containing naphthenic groups. Naphthenic solvents are usually commercially available as mixtures of naphthenic, normal paraffinic, and/or isoparaffinic solvents. Examples of suitable naphthenic solvents that are commercially available include EXXSOL® D-40, D-60, D-80, D-110, and D-130 from Exxon Chemicals, Houston, Texas. A preferred hydrocarbon solvent for use in the present invention is a mixture of naphthenic and normal paraffinic solvents, commercially available as EXXSOL® D-60.

A co-solvent that is soluble in both the aqueous phase and the oil phase may also be added to the composition of this invention. The co-solvent aids in the solubilization of the insecticidally active ingredient in the oil phase and also accelerates the breaking of the emulsion. Typically, the amount of the co-solvent present is from about 1% to about 5% by weight, based on the total weight of the composition. If the amount exceeds about 5%, an emulsion may not form. Examples of suitable co-solvents include alcohols such as methanol, ethanol, propanol, and isopropanol.

As disclosed, above, the composition of the present invention contains at least one insecticidally-active ingredient in an amount effective to provide insecticidal activity. Any conventional active ingredient that is water-insoluble and hydrocarbon solvent-soluble can be used. Examples of suitable active ingredients include but are not limited to natural pyrethrins, synthetic pyrethroids such as permethrin, cypermethrin, deltamethrin, alphamethrin, cyphenothrin, fenvolerate, allethrin, tetramethrin, resmethrin, bioresmethrin, d-trans-allethrin, and phenothrin, halogenated pyrethroids, and cyano-pyrethroids. Typically, the active ingredient is present in the composition of the present invention in an amount of from about 0.20% to about 2% and preferably from about 0.10% to about 1% by weight, based on the total weight of the composition. A synergist for the active ingredient may also be included in the composition of this invention in conventional amounts. Examples of suitable synergists include piperonyl butoxide and N-octyl bicycloheptene dicarboximide.

The water forming the aqueous phase of the composition of the invention should be present in an amount effective to form an oil-out emulsion of limited stability and to facilitate spraying. When the composition is sprayed from a container, the water functions as a filler to add bulk to the sprayed product. Typically, water is present in the composition in an amount of from about 30% to about 70% and preferably from about 40% to about 70% by weight, based on the total weight of the composition.

The insecticidally-active composition of the present invention may be combined with a suitable propellant to form an aerosol formulation. Examples of suitable propellants include compressed gas propellants such as nitrogen, carbon dioxide, and nitrous oxide; liquefied gas propellants such as fluorinated and chlorinated hydrocarbons, dimethyl ether, vinyl chloride; saturated hydrocarbons such as propane, butane, isobutane, isopentane, and mixtures thereof; and mixtures of liquefied gases and compressed gases. In order to reduce environmental pollution, it is preferred to employ as the propellant liquefied saturated hydrocarbons.

Typically, the hydrocarbon propellant is present in the composition of this invention in an amount of from about 8% to about 50% and preferably from about 5% to about 30% by weight, based on the total weight of the composition.

Other ingredients that may form a part of the composition of the present invention include fragrance in conventional amounts to mask the unpleasant odor of the active ingredients and corrosion inhibitors such as sodium nitrite, sodium benzoate, and mixtures thereof in conventional amounts to inhibit corrosion of the metal containers in which the composition is usually contained.

The present invention will now be illustrated with the following non-limiting Example.

### EXAMPLE

An insecticidally-active composition that can form an oil-out emulsion of limited stability was prepared with the following ingredients.

| Ingredients | Percent By Weight |
|---|---|
| Pyrethrin 20% | 1.000 |
| Permethrin 90% | 0.222 |
| Piperonyl Butoxide | 0.500 |
| Sorbitan Monooleate | 0.050 |
| Fragrance | 0.228 |
| Isopropanol | 1.000 |
| EXXSOL® D-60 | 29.000 |
| Sodium Nitrite | 0.090 |
| Water | 59.910 |
| Propellant A-91 | 8.000 |

Propellant A-91 is a conventional propellant containing 70% propane and 30% isobutane.

The composition was prepared by dissolving the pyrethrin 20%, permethrin 90%, piperonyl butoxide, sorbitan monooleate, fragrance, and isopropanol in EXXSOL® D-60 to form a solvent intermediate. The sodium nitrite was dissolved in water to form a water intermediate. The water intermediate was then added to an aerosol container, followed by the solvent intermediate. A valve was then placed into the container and crimped. The container was then pressurized with propellant A-91.

The container was then shaken to form an oil-out emulsion of limited stability. Promptly thereafter, the composition was sprayed from the container onto a target surface. It was observed that when the spray hit the target surface, the aqueous phase separated out from the oil phase almost immediately. As a result, no unsightly milky stains were left on the target surface.

While the present invention has been described with respect to what is presently considered to be the preferred embodiments, it is to be understood that the invention is not limited to the disclosed embodiments.

### Industrial Applicability

Sprayable insecticidal compositions have immediate usefulness in the control of insect pests. The insecticidally-active composition of the invention has the further industrially desirable application of providing a composition having reduced concentration of petroleum volatiles while still being both convenient for spraying by conventional means and an effective killer of insects sprayed.

## Claims

1. An insecticidally-active water-in oil-out emulsion, comprising:
water;
a hydrocarbon solvent selected from the group consisting of aliphatic, aromatic, and naphthenic solvents, and mixtures thereof;
at least one insecticidally active ingredient selected from the group consisting of natural pyrethrins, synthetic pyrethroids, halogenated pyrethroids, and cyano-pyrethroids; and
an amount of surfactant effective to form a non-foaming water-in oil-out emulsion which upon visual inspection appears to completely separate into a composition with an oil phase and a water phase within fifteen seconds after mixing of the emulsion ceases, the surfactant being present in an amount of from 0.03% to less than 0.10% by weight, based on the total weight of the emulsion;
wherein the surfactant has an HLB of between about 3 and about 9 and is selected from the group consisting of glycol, glycerol, and sorbitol esters of oleic, stearic, palmitic, and lauric acids, polyethoxylated fatty alcohols having 2 to 9 ethylene oxide units, sorbitan monooleate, sorbitan monostearate, and sorbican monopalmitate and polyethoxylated nonyl phenols having 2 to 9 ethylene oxide units.

2. The insecticidally-active emulsion according to claim 1, wherein said surfactant is present in an amount of from 0.05% to less than 0.10%.

3. The insecticidally-active emulsion according to claim 1, wherein said emulsion further comprises a co-solvent.

4. The insecticidally-active emulsion according to claim 3, wherein said co-solvent is an alcohol.

5. The insecticidally-active emulsion according to claim 1, further comprising a synergist for said active ingredient.

6. The insecticidally-active emulsion according to claim 5, wherein said synergist is selected from the group consisting of piperonyl butoxide and N-octyl bicychloheptene dicarboximide.

7. The insecticidally-active emulsion according to claim 1, wherein said emulsion further comprises a propellant.

8. The insecticidally-active emulsion according to claim 7, wherein said propellant is selected from the group consisting of liquified saturated hydrocarbons and mixtures thereof.

9. The insecticidally-active emulsion according to claim 1, wherein said emulsion further comprises a fragrance.

10. The insecticidally-active emulsion according to claim 1, wherein said emulsion further comprises a corrosion inhibitor.

11. The insecticidally-active emulsion according to claim 10, wherein said corrosion inhibitor is selected from the group consisting of sodium nitrite, sodium benzoate, and mixtures thereof.

12. The composition of claim 1, wherein the composition was formed by separation of the claim 1 emulsion.

## Patentansprüche

1. Wasser-in-Öl-Emulsion mit Insektizidaktivität, die
Wasser,
ein Kohlenwasserstoff-Lösungsmittel, das gewählt ist aus der aus aliphatischen, aromatischen und naphthenischen Lösungsmitteln sowie deren Mischungen bestehenden Gruppe,
mindestens einen Bestandteil mit Insektizidaktivität, das gewählt ist aus der aus natürlichen Pyrethrinen, synthetischen Pyrethroiden, halogenierten Pyrethroiden und Cyanopyrethroiden bestehenden Gruppe, sowie
ein grenzflächenaktives Mittel in einer Menge aufweist, die die Bildung einer nichtschäumenden Wasser-in-Öl-Emulsion bewirkt, die sich bei Sichtprüfung innerhalb fünfzehn Sekunden nach dem Ende des Mischens der Emulsion vollständig in eine Zusammensetzung mit einer Öl- und einer Wasserphase zu trennen scheint, wobei das grenzflächenaktive Mittel in einer Menge von 0,03 Gew.-% bis weniger als 0,10 Gew.-% auf der Basis des Gesamtgewichts der Emulsion vorliegt, und wobei
das grenzflächenaktive Mittel einen HLB-Wert zwischen etwa 3 und etwa 9 hat und aus der aus Glycol, Glycerol, Sorbitestern von Öl-, Stearin-, Palmitin- und Laurinsäure, polyethoxylierten Fettalcoholen mit 2 bis 9 Ethylenoxid-Einheiten, Sorbitanmonooleat, Sorbitanmonostearat und Sorbitanmonopalmitat sowie polyethoxylierten Nonylphenolen mit 2 bis 9 Ethylenoxid-Einheiten bestehenden Gruppe gewählt ist.

2. Emulsion mit Insektizidaktivität nach Anspruch 1, bei der das grenzflächenaktive Mittel in einer Menge von 0,05 % bis weniger als 0,10 % vorliegt.

3. Emulsion mit Insektizidaktivität nach Anspruch 1, die weiterhin ein Co-Lösungsmittel aufweist.

4. Emulsion mit Insektizidaktivität nach Anspruch 3, bei der das Co-Lösungsmittel ein Alkohol ist.

5. Emulsion mit Insektizidaktivität nach Anspruch 1, die weiterhin einen Synergisten für den aktiven Bestandteil aufweist.

6. Emulsion mit Insektizidaktivität nach Anspruch 5, deren Synergist aus der aus Piperonylbutoxid und N-Octylbicycloheptendicarboximid bestehenden Gruppe gewählt ist.

7. Emulsion mit Insektizidaktivität nach Anspruch 1, die weiterhin ein Treibmittel aufweist.

8. Emulsion mit Insektizidaktivität nach Anspruch 7, deren Treibmittel aus der aus verflüssigten gesättigten Kohlenwasserstoffen und deren Mischungen bestehenden Gruppe gewählt ist.

9. Emulsion mit Insektizidaktivität nach Anspruch 1, die weiterhin einen Duftstoff aufweist.

10. Emulsion mit Insektizidaktivität nach Anspruch 1, die weiterhin einen Korrosionshemmer aufweist.

11. Emulsion mit Insektizidaktivität nach Anspruch 10, deren Korrosionshemmer aus der aus Natriumnitrit, Natriumbenzoat und deren Mischungen bestehenden Gruppe gewählt ist.

12. Zusammensetzung nach Anspruch 1, die durch Trennen der Emulsion nach Anspruch 1 gebildet wurde.

## Revendications

1. Emulsion eau dans huile ayant une activité insecticide, comprenant :
de l'eau ;
un solvant hydrocarboné choisi dans le groupe comprenant des solvants aliphatiques, aromatiques et naphténiques, ainsi que des mélanges de ceux-ci ;
au moins un ingrédient ayant une activité insecticide, choisi dans le groupe comprenant les pyréthrines naturelles, les pyréthroïdes de synthèse, les pyréthroïdes halogénés et les cyanopyréthroïdes ; et
une quantité d'agent tensio-actif efficace pour former une émulsion eau dans huile non moussante qui, à l'examen visuel, apparaît comme se séparant en une composition avec une phase huileuse et une phase aqueuse dans un délai de quinze secondes après que le mélangeage de l'émulsion a cessé, l'agent tensio-actif étant présent en une quantité de 0,03% à moins de 0,10% en poids, ramenée au poids total de l'émulsion ;
dans laquelle l'agent tensio-actif a un équilibre hydrophile/lipophile (EHL) d'environ 3 à environ 9 et est choisi dans le groupe comprenant des esters glycoliques, glycéroliques et sorbitoliques des acides oléique, stéarique, palmitique et laurique, des alcools gras polyéthoxylés ayant de 2 à 9 unités oxyde d'éthylène, le monooléate de sorbitane, le monostéarate de sorbitane et le monopalmitate de sorbitane, ainsi que des nonylphénols polyéthoxylés ayant de 2 à 9 unités oxyde d'éthylène.

2. Emulsion ayant une activité insecticide selon la revendication 1, dans laquelle ledit agent tensio-actif est présent en une quantité de 0,05% à moins de 0,10%.

3. Emulsion ayant une activité insecticide selon la revendication 1, dans laquelle ladite émulsion comprend en outre un co-solvant.

4. Emulsion ayant une activité insecticide selon la revendication 3, dans laquelle ledit co-solvant est un alcool.

5. Emulsion ayant une activité insecticide selon la revendication 1, comprenant en outre un synergiste pour ledit ingrédient actif.

6. Emulsion ayant une activité insecticide selon la revendication 5, dans laquelle ledit synergiste est choisi dans le groupe comprenant le butoxyde de pipéronyle et le bicycloheptène dicarboximide de N-octyle.

7. Emulsion ayant une activité insecticide selon la revendication 1, dans laquelle ladite émulsion comprend en outre un propulseur.

8. Emulsion ayant une activité insecticide selon la revendication 7, dans laquelle ledit propulseur est choisi dans le groupe comprenant des hydrocarbures saturés liquéfiés et des mélanges de ceux-ci.

9. Emulsion ayant une activité insecticide selon la revendication 1, dans laquelle ladite émulsion comprend en outre un parfum.

10. Emulsion ayant une activité insecticide selon la revendication 1, dans laquelle ladite émulsion comprend en outre un inhibiteur de corrosion.

11. Emulsion ayant une activité insecticide selon la revendication 10, dans laquelle ledit inhibiteur de corrosion est choisi dans le groupe comprenant le nitrite de sodium, le benzoate de sodium, ainsi que des mélanges de ceux-ci.

12. Composition selon la revendication 1, dans laquelle la composition a été formée par séparation de l'émulsion de la revendication 1.
